# EUROPÄISCHE PATENTANMELDUNG

(11) **EP 2 192 096 A2**
(43) Veröffentlichungstag der Anmeldung: **02.06.2010**
(21) Anmeldenummer: 09157280.0
(22) Anmeldetag: 03.04.2009
(51) Int. Cl.: C04B 35/573, C04B 37/00

(54) **Verfahren zur Herstellung eines Keramikbauteils**

(30) Priorität: 26.11.2008 DE 102008037591
(71) Anmelder: Fraunhofer-Gesellschaft zur Förderung der angewandten Forschung e.V., 80686 München (DE); Schunk Kohlenstofftechnik GmbH, 35452 Heuchelheim (DE)
(72) Erfinder: Siegel, DR., Stefan, 01189, Dresden (DE); Weiss, DR., Roland, 35625, Hüttenberg (DE); Lauer, Andreas, 35274, Kirchhain (DE); Nauditt, Gotthard, 35625, Hüttenberg (DE)
(74) Vertreter: Stoffregen, Hans-Herbert

(57) **Zusammenfassung**

Die Erfindung bezieht sich auf ein Verfahren zur Herstellung eines Keramikbauteils gewünschter Endgeometrie unter Verwendung zumindest eines zellulosehaltigen Halbzeugformteils, das in nicht oxidierender Gasatmosphäre pyrolysiert wird. Um komplexe Bauteile herzustellen, wird vorgeschlagen, dass zumindest zwei Halbzeugformteile entweder in Rohform oder nach zumindest teilweiser Carbonisierung stoffschlüssig gefügt werden. Die gefügten Formteile werden anschließend zur Erzielung der gewünschten Endgeometrie oder einer der gewünschten Endgeometrie zzgl. eines Aufinasses entsprechenden Geometrie bearbeitet. Sodann stehen nach der Carbonisierung der Formteile in nicht oxidierender Atmosphäre Carbonteile zur Verfügung. Alternativ können in einer nicht oxidierenden Gasatmosphäre durch einen Metallinfiltrationsprozess bei gleichzeitigem reaktiven Fügen der zumindest zwei Formteile diese in einen CMC-Verbundwerkstoff umgewandelt werden.

## Beschreibung

Die Erfindung bezieht sich auf ein Verfahren zur Herstellung eines Keramikbauteils oder Carbonbauteils gewünschter Endgeometrie unter Verwendung zumindest eines zellulosehaltigen Halbzeugformteils, das in nicht oxidierender Gasatmosphäre pyrolysiert wird.

Ein entsprechendes Verfahren zur Herstellung plattenförmiger, eine ebene Geometrie aufweisender Bauteile ist der EP-B-1 453 773 zu entnehmen. Als Halbzeugformteil wird eine hochdichte Faserplatte mit homogener Verteilung der Dichte über die Plattendiagonale verwendet, die sodann derart pyrolysiert wird, dass eine gewünschte Dichte erzielbar ist. Anschließend erfolgt ein Silizieren. Durch diese Maßnahmen kann ein homogenes großflächiges Keramikbauteil als Massenprodukt hergestellt werden.

Die DE 198 23 507 bezieht sich auf ein Verfahren zur Herstellung von Formkörpers auf der Basis von Kohlenstoff, Carbiden und/oder Carbonitriden. Dabei werden biogene Stoffe verwendet, die durch Carbonisieren in ein hauptsächlich kohlenstoffhaltiges Produkt konvertiert werden, um anschließend zu hochkohlenstoffhaltigen Formkörpern verarbeitet zu werden. Als biogene Ausgangsmaterialien werden Faserverbunde in Form von Vliesen, Matten oder Geweben, also Langfaserverbunde sowie großflächige dünnwandige Flächengebilde vorgeschlagen. Entsprechende technische Flächengebilde unterliegen in ihrer Nutzung als Kohlenstoffwerkstoffe mit mechanischer Funktion einer entscheidenden Einschränkung, da die erreichbaren Kohlenstoffdichten für die meisten Anwendungen zu gering sind, so dass die Festigkeiten nicht die Anforderungen an mechanisch hochbeanspruchbare Bauteile erfüllen. Auch als Kohlenstoff-Vorlage für eine Reaktionssilicierung ist ein solches Produkt nur bedingt verwendbar, da ein hoher Anteil freien Siliciums im Endprodukt entscheidende Einschränkungen im Korrosions- und Hochtemperaturverhalten bewirkt.

Die Verwendung holzartiger Produkte als Ausgangsmaterialien für kostengünstige SiC-Keramiken, die über einen sogenannten "Biocarbon-Vorkörper" durch Flüssigphasensilicierung gebildet werden, ist aus "Krenkel: Biomorphe SiC-Keramiken aus technischen Hölzern", Symposium "Verbundwerkstoffe und Werkstoffverbunde", Herausg. K. Schulte, K. Kainer, Wiley-Verlag Chemie Weinheim 1999 sowie "Low cost ceramics from wooden products", Materials Week, München 23-28.9.2000" bekannt. Experimentell wurden dabei vor allem Kohlenstoffkörper aus pyrolysierten Furniersperrhölzern siliciert und in einen C/SiC/Si-Werkstoff überführt.

Aus der DE 199 47 731 A1 ist ein Verfahren zur Herstellung eines Bauteils aus SiC-Keramik bekannt. Dabei wird aus einem cellulosehaltigen Ausgangskörper durch Pyrolyse und nachfolgende Infiltration mit Silicium ein keramisches Bauteil hergestellt. Der Ausgangskörper besteht aus einem technischen Halbzeug, das aus cellulosehaltigem Material in Form von Spänen und/oder aus einzelnen Lagen flächiger Holzteile gebildet wird. Dabei wird das Gefüge des Halbzeuges durch verschiedene Verhältnisse von cellulosehaltigem Material und Bindemittel eingestellt, wobei der Bindemittelgehalt mehr als 5 % beträgt. Durch die Lagenbildung und Wahl des cellulosehaltigen Materials entsteht ein Halbzeug mit einem hohen Anteil an translaminaren Porenkanälen, die eine Infiltration mit flüssigem Silicium erleichtern. Dieser Vorgang wird bei einem schichtweise aufgebauten Halbzeug noch durch Rissbildung bei der Pyrolyse unterstützt. Durch dieses inhomogene, stark poröse Gefüge entsteht aber eine nur für sehr eingeschränkte SiSiC-Sonderanwendungen nutzbare Kohlenstoff-Vorlage. Der resultierende hohe Anteil an freiem Si im Endprodukt schränkt sowohl die mechanischen Eigenschaften als auch das Korrosions- und Hochtemperaturverhalten entscheidend ein.

Aus der JP 2001-048648 ist es bekannt, ein Bauteil auf der Basis von Kohlenstoff unter Verwendung eines lignocellulosehaltigen Halbzeugformteils herzustellen, das unter Sauerstoffausschluss pyrolysiert wird. Die Kohlenstoff-Formteile weisen geringe mechanische Festigkeit auf.

Die WO 01/64602 bezieht sich auf ein Keramikbauteil, das auf der Basis eines lignocellulosehaltigen Halbzeugformteils hergestellt worden ist. Aufgrund der Materialzusammensetzung und Verarbeitungstechnologie ergeben sich eine geringe Werkstoffdichte sowie Gefüge- bzw. Dichte-Inhomogenitäten.

Aus der DE 39 22 539 C2 ist ein Verfahren zur Herstellung von hochpräzisen Heizelementen aus CFC bekannt, das als Ausgangskörper ein gepresstes Kohlenstofffasergewebe oder gewickelte Kohlenstoffmonofilamentfasern vorschlägt. Dabei besteht die Möglichkeit, den sodann pyrolysierten Körper zu silicieren.

Die JP 2026817 A bezieht sich auf die Herstellung von Carbonisat-Platten auf HolzfaserBasis.

Die GB-A 1 346 735 bezieht sich auf Kohlenstoffbauteile aus nachimprägnierten zellulosehaltigen dünnen Halbzeugen. Weder ein Silicieren ist angesprochen, noch sind Hinweise auf eine homogene Dichteverteilung bzw. isotrope Eigenschaften gegeben.

Aus der Literaturstelle Greil, P: "Biomorphous ceramics from lignocellulosics", Journal of the European Ceramic Society, Elsevier Science Publishers, Barking, Essex, GB, Bd. 21, Nr. 2, Februar 2001 (2001-02), Seiten 105-118, ist ein Keramikbauteil auf der Basis eines lignolcellulosehaltigen Halbzeugformteils bekannt. Ausgangspunkt sind dabei monolithische natürliche Hölzer und ligninfreie Cellulose-Prekursoren. Geringe Werkstoffdichten bei hoher Porosität lassen nur geringe mechanische Fertigkeiten zu.

Aufgrund hervorragender Festigkeit auch bei hohen Temperaturen, geringer Dichte, hoher Härte und Elastizitätsmodul sowie ausgezeichneter Verschleiß- und Korrosionsbeständigkeit eröffnet sich für keramische Werkstoffe ein weites Anwendungsfeld im Maschinen- und Anlagenbau. Der geringe Wärmeausdehnungskoeffizient prädestiniert keramische Baugruppen für Leichtbauträgerfunktionen unter extremen klimatischen Bedingungen und Genauigkeitsanforderungen.

Vielfältige Anwendungen in der Optik, der Luft- und Raumfahrttechnik und im Spezialgerätebau sind nur über diese der Strukturkeramik immanenten Eigenschaften überhaupt möglich.

Eine noch breitere Nutzung wird oft durch die Kosten solcher komplexer Baugruppen limitiert. Dem hohen Bedarf an solchen Produkten stehen die begrenzten Fertigungsmöglichkeiten entgegen. Bekannt sind die typischen pulvertechnologischen Herstellungsverfahren in einer Kette über Pulveraufbereitung, Formgebung und Hochtemperatur-Wärmebehandlungen zum Entbindern und Sintern bis zu thermischen und mechanischen Finish-Prozessen. Technisch und wirtschaftlich sind dabei sehr schnell Grenzen erreicht, besonders wenn es sich um große und komplexe Baugruppen als Unikate oder Kleinserien handelt.

Generative Herstellungsverfahren wie das selektive Lasersintern oder Laminated Object Moulding sind extrem aufwändig und die Produkte meist eingeschränkt im mechanischen Leistungspotenzial.

Bewährt hat sich die Herstellung komplexer Si-SiC-Baugruppen über Fügesilicieren einzelner Modulbausteine, die vorher mit engen Toleranzen endbearbeitet werden müssen. Dieses Verfahren ist jedoch sehr kostenintensiv und nur mit Einschränkungen praktikabel.

Alternativ zu den nach den zuvor beschriebenen Verfahren hergestellten Keramiken haben sich die eingangs erwähnten biogenen Keramikwerkstoffe auf Basis nachwachsender pflanzlicher Rohstoffe erwiesen. Als besonders günstig ist dabei die Nutzung der beschriebenen plattenförmigen Halbzeuge auf Holzfaserbasis zu bezeichnen.

Keramische Baugruppen mit dreidimensionalen Abmessungen größer 10⁻¹ m sind aber weder durch Mehrfachschichtung solcher Faserplatten noch durch Verpressen aufbereiteter Naturfaser oder deren Pyrolysatprodukte wirtschaftlich herstellbar.

Entscheidendes Hindernis einer defektfreien Carbonisierung von Holzrohformen ist neben strukturellen Inhomogenitäten die Notwendigkeit stabiler Ausgangswege für die Pyrolyseabprodukte insbesondere in Form von Gasen. Bereits bei Bauteilabmessungen im Dezimeterbereich treten bei Nichtbeachtung Risse, Delaminationen und Profilverzerrungen auf.

Der vorliegenden Erfindung liegt die Aufgabe zugrunde, ein Verfahren der eingangs genannten Art dahingehend weiterzubilden, dass die prozesstechnischen Begrenzungen bei der Pyrolyse von pflanzenfaserhaltigen Rohformen umgangen werden. Gleichzeitig sollen jedoch die Kostenvorteile beibehalten werden, die bei der Nutzung von bekannten Rohstoffhalbzeugen wie Faserplattenhalbzeugen erzielbar sind.

Insbesondere sollen großvolumige Bauteile herstellbar sein, ohne dass bei der Pyrolyse entstehende Abprodukte wie Gas dazu führen, dass Risse, Delaminationen oder Profilverzerrungen auftreten.

Zur Lösung der Aufgabe sieht die Erfindung im Wesentlichen vor, dass zumindest zwei Halbzeugformteile entweder in Rohform oder nach zumindest teilweiser Carbonisierung stoffschlüssig gefügt, dass die gefügten Formteile zur Erzielung der gewünschten Geometrie oder einer der gewünschten Geometrie zzgl. eines Aufmasses entsprechenden Geometrie bearbeitet und nach der Carbonisierung in nicht oxidierender Gasatmosphäre als Carbonanteil zur Verfügung stehen oder durch einen Metallinfiltrationsprozess bei gleichzeitigem reaktivem Fügen der zumindest zwei Formteile in das Keramikbauteil, also einen CMC (ceramic matrix composite)-Verbundwerkstoff, umgewandet werden.

Aufgrund der erfindungsgemäßen Lehre können komplexe Baugruppen durch modulares Zusammensetzen von Formteilen hergestellt werden, um ein gewünschtes komplexes Verbundbauteil zur Verfügung zu stellen. Dabei weisen die einzelnen Halbzeugformteile Abmessungen auf, die sicherstellen, dass bei der Pyrolyse auftretende Abprodukte nicht zu Rissbildung, Delaminationen oder Profilverzerrungen führen. Daher ist insbesondere vorgesehen, dass die Wandstärke des Halbzeugformteils ≤ 160 mm, insbesondere ≤ 120 mm - 100 mm beträgt.

Insbesondere ist vorgesehen, dass das stoffschlüssige Fügen der Halbzeugformteile im Rohzustand mittels eines organischen Kleberharzes wie Holzleim durchgeführt wird. Zum Fügen können vorteilhafterweise organische Kleberharze verwendet werden, deren Carbon-Ausbeute bei der Pyrolyse durch die Zumischungen eines oder mehrerer Kohlenstoffträger wie Graphit, Ruß, Pech und/oder pyrolysierte Fasern an die Erfordernisse der nachfolgenden reaktiven Keramisierung angepasst werden.

Das stoffschlüssige Fügen der vorzugsweise zumindest teilweise carbonisierten, also entweder noch nicht vollständig carbonisierten oder vollständig carbonisierten Formteile, erfolgt durch Kleber und/oder durch Tränken. Insbesondere erfolgt das stoffschlüssige Fügen der Formteile, die modular zusammengesetzt werden, mit harzbasierten kohlenstoffhaltigen Klebern, die gleichfalls durch ergänzende Zusätze wie beispielsweise Graphit, Ruß, Pech und/oder pyrolysierte Fasern hinsichtlich Ihres Kohlenstoffangebots für die nachfolgende reaktive Keramisierung optimiert werden können.

Eigenerfinderisch ist vorgesehen, dass mittels des das stoffschlüssige Fügen ermöglichenden Fügemittels wie Kleber oder Tauchmedium in den einzelnen Formteilen eine Anpassung der Porenstruktur erfolgt. Insbesondere geschieht dies durch gezielte Kohlenstoffdotierung in den verwendeten Fügemitteln.

Die Halbzeugformteile können mit Harzen und/oder anderen keramischen Prekursoren getränkt werden, damit Gefüge und Endprodukteigenschaften des Keramikbauteils anforderungsgerecht gesteuert werden. Dabei sind Prekursoren Stoffe, die durch Wärmebehandlung in Keramik umgewandelt werden.

In Weiterbildung der Erfindung wird vorgeschlagen, dass als Halbzeuge in ihrer Rohform solche verwendet werden, die eine Kontur aufweisen, die unter Berücksichtigung des bei der Herstellung des Keramikbauteils auftretenden Schwunds an die gewünschte Endgeometrie grob angepasst ist.

Insbesondere ist vorgesehen, dass die zusammengesetzten Formteile nach dem Carbonisieren in Endformgeometrie bzw. nahezu Endformgeometrie bearbeitet werden, wobei aufgrund des weichen Carbonzustands der zusammengesetzten Formteile auch komplizierte geometrische Konturen, Hinterschneidungen, Aussparungen, Absätze oder Gewinde oder komplex zusammengesetzte Gebilde herausgearbeitet werden können.

Des Weiteren ist vorgesehen, dass die Bearbeitung im Carbonzustand in einem Umfang erfolgt, dass eine Endbearbeitung des Keramikbauteils durch Schleifen auf die notwendigsten Funktionsflächen wie Dichtflächen beschränkt wird.

Insbesondere ist es vorgesehen, dass als Halbzeugformteile MDF-Platten (mitteldichte Faserplatten) mit Rohdichten zwischen 600 kg/m³ und 800 kg/m³ und/oder HDF-Platten (hochdichte Faserplatten) mit Rohdichten > 800 kg/m³ verwendet werden. Entsprechende Platten können zusammengefügt und sodann den zuvor erläuterten Verfahrensschritten unterzogen werden, um ein keramisches Verbundbauteil zur Verfügung zu stellen. Dabei ist insbesondere vorgesehen, dass im Rohzustand, also im organischen Kompaktierungszustand eine um die spätere Schwingungsmaß vergrößerte Grobkontur herausgearbeitet wird.

Eine Ausgestaltung der Erfindung sieht vor, dass die Holzfaserplatten zur Vermeidung des einer Keramisierung gegebenenfalls abträglichen Dichtegradienten abgedünnt werden, d.h. die dichteren Oberflächenbereiche werden bei Bedarf durch mechanische Bearbeitung abgetragen.

Des Weiteren ist erfindungsgemäß vorgesehen, dass im organischen Halbzeugformteil durch metallische und/oder metallorganische Additive zum pressfähigen Versatz anorganische Wirkkomponenten für die Carbidbildung und/oder die Ausbildung späterer spezifischer Eigenschaftsmerkmale eingebracht werden. Bei den Additiven kann es sich um Silizium, Titan, Chrom, Siloxane oder Silazane handeln, um nur beispielhaft metallische bzw. metallorganische Additive zu nennen, die sich in dem pressfähigen Versatz als Additiv befinden. Der pressfähige Versatz sind dabei der Rohstoff, d.h. die Pflanzen- bzw. Holzfasern plus Bindemittel.

Erfindungsgemäß besteht die Möglichkeit, dass bereits im organischen Kompaktierungszustand eine um die späteren Schwindungsmaße vergrößerte Grobkontur herausgearbeitet wird oder geeignete Einzelsegmente durch Kleben gefügt werden.

Komplexe Baugruppen können sowohl im Holz- bzw. Rohzustand durch Holzkleber als auch im carbonisierten Zustand (nach eventuell erforderlicher Zwischenbearbeitung) durch Carbon-Kleber aus einzelnen Systemelementen gefügt werden. Das Fügen durch Kleben im Carbon-Zustand kann mit Maßnahmen des formschlüssigen Fügens unterstützt werden, um die Gefügehomogenisierung an der Nahtstelle zu unterstützen und Delaminierungen auszuschließen.

Die Pyrolyse der Vorformen erfolgt unter Luftabschluss bei Temperaturen > 250 °C. Eine Vollcarbonisierung der gefügten Baugruppen erfordert Temperaturen > 900 °C ebenfalls wieder unter Luftabschluss, um unakzeptable Geometrieänderungen der auf Endmaß bearbeiteten Bauteile bei der späteren Silicierung ausschließen zu können. Gegebenenfalls kann ein Vorcarbonisieren erfolgen. Nach diesem sind noch nicht sämtliche Inhaltsstoffe carbonisiert. Sodann erfolgt das Fügen - stoffschlüssig und gegebenenfalls zusätzlich formschlüssig. Anschließend wird das entsprechende aus den gefügten Formteilen bestehende Modul vollständig carbonisiert.

Alternativ kann auch ein Fügen nach vollständiger Carbonisierung der Formteile erfolgen. Anschließend wird erneut eine Wärmebehandlung durchgeführt, um das Fügemittel zu carbonisieren.

Für die Endbearbeitung der Carbon-Formen werden vorzugsweise mechanische spanabhebende Verfahren eingesetzt. Jedoch sind auch Sonderverfahren wie beispielsweise Wasserstrahlschneiden oder Laserbearbeitung geeignet.

Beim anschließenden reaktiven Metallschmelzinfiltrieren oder Gasphaseninfiltrieren in die fertig bearbeiteten Carbon-Bauteile findet keine Volumen- oder Gestaltsänderung mehr statt.

Bevorzugt sind Silicierverfahren zur Bildung von Si-SiC-C-Verbundwerkstoffen zu nennen. Beim Kapillarverfahren wird Si-Schmelze in die Porenräume infiltriert und reagiert sofort mit dem Carbongerüst zu Siliciumcarbid. Die Silicierung mittels Sihaltigem Dampf ist weitgehend diffusionsgesteuert und erfordert entsprechend längere Prozesszeiten.

Überraschende Erkenntnis des erfindungsgemäßen Verfahrens ist, dass trotz gravierender Unterschiede in der Struktur von Harz-basierter Fügezone und Pflanzenfaserbasierten Fügepartnern mechanisch sehr stabile und weitgehend strukturhomogene keramische Baugruppen herstellbar sind. Durch Anpassung der Porenstruktur in den einzelnen Komponenten, teilweise auch mit Maßnahmen gezielter Kohlenstoff-Dotierung in den verwendeten Klebern, ist eine ausreichende Basis für eine gute Qualität des Silicierfügens absicherbar.

Die entscheidenden Vorteile des erfindungsgemäßen Herstellungsverfahrens für komplexe keramische Verbundsysteme sind die Nutzung kostengünstiger holztechnologischer Formgebungsverfahren, geeignete Fügetechniken über Klebverfahren, die den Metallschmelzinfiltrationsprozess durch die Fasermorphologie begünstigenden Verbundstrukturen und vor allem eine sehr effektive Herausarbeitung der Endgeometrien im weichen Carbon-Zustand. Finishbearbeitungen im keramischen Endzustand beschränken sich auf notwendige Funktionsflächen.

Die der Carbonisierung vorausgehende Pyrolyse sollte bei einer Temperatur zwischen 250 °C und 800 °C durchgeführt werden. Das Carbonsisieren selbst erfolgt bei einer Temperatur von zumindest 1000 °C, insbesondere von zumindest 1100 °C.

Während der Pyrolyse bzw. Carbonisierung der zusammengefügten Halbzeugformteile erfolgt ein Aufheizen in Raten zwischen 1 K/h bis 1 K/min., insbesondere kleiner 0,1 K/min.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
Fig. 1 ein Verbundbauteil in Form eines sphärischen Reflektors und
Fig. 2 ein Wärmetauschermodul.

Als Beispiel 1 soll nachstehend die erfindungsgemäße Lehre an einem Justiersegment für Belichtungsoptiken näher erläutert werden.

An Justiersegmente für Belichtungsoptiken werden extreme Anforderungen hinsichtlich hoher Systemsteifigkeit und niedrigem thermischen Ausdehnungskoeffizienten gestellt, die von metallischen Werkstoffen zunehmend nicht mehr erfüllbar sind.

Hier bieten sich Keramikwerkstoffe als Problemlösung an. Bei größeren Bauteilen entstehen jedoch erhebliche Kosten, die mit dem erfindungsgemäßen Verfahren deutlich reduziert werden können. Zusätzlich ergeben sich aus der Erfindung neue Positionier- und Justiermöglichkeiten, da beispielsweise Gewinde, Bundauflagen und Schrägbohrungen bereits im Carbon-Zustand eingearbeitet werden können.

Im vorliegenden Beispiel 1 wurde eine Positioniereinheit der Abmessungen 150 mm x 150 mm x 20 mm auf der Basis von mitteldichten Holzfaserplatten MDF gefertigt. Dazu werden zwei Platten MDF 210 mm x 210 mm x 22 mm durch einen organischen Holzkleber, angereichert mit 10 Masse-% Graphitpulver, miteinander verbunden. Vorher wurde aus den Einzelplatten jeweils eine Kreisscheibe Durchmesser 110 mm herausgeschnitten, die später eine zylindrische Zentralöffnung Durchmesser 90 mm als ringförmige Objektivaufnahme bilden. Der geklebte Verbund wurde nach Luftaushärtung unter Stickstoff bei 1150 °C carbonisiert. Dabei schrumpfen jede Holzfaserplatte und damit das gesamte Bauteil in der Plattenebene um 23 %, in der Höhe um 42 %. Das entstandene Carbon-Bauteil wird durch Fräsen auf Endgeometrie gebracht. Funktionell erforderliche Durchgangslöcher und Gewinde werden gebohrt. Die erreichte Carbondichte von 0,62 g/cm³ eignet sich für eine Silicierung. Diese wird als Kapillarinfiltration mit flüssigem Silicium bei 1600 °C unter Argon-Atmosphäre durchgeführt.

Am silicierten Bauteil sind lediglich noch funktionsentscheidende Dichtflächen mit Diamantwerkzeugen nachzuschleifen. Bei einer 4-Punkt-Biegebruchfestigkeit von 280 MPa wird ein statischer Elastizitätsmodul von 320 GPa erzielt. Der thermische lineare Ausdehnungskoeffizient wird mit 2,9 x 10⁻⁶ K⁻¹ den Anforderungen ebenfalls gerecht.

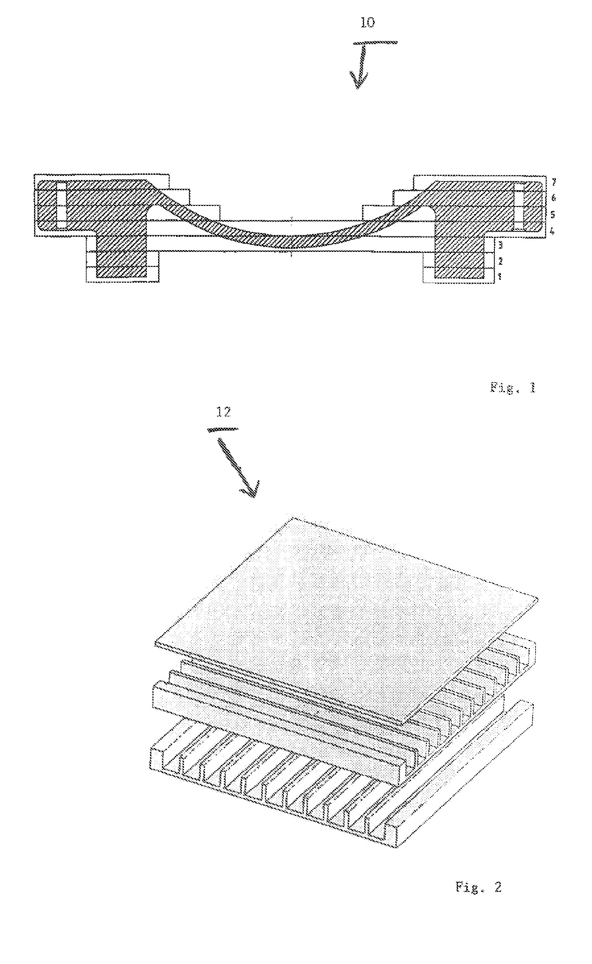

Das erfindungsgemäße Verfahren wird nachstehend ferner anhand der in den Figuren dargestellten komplexen Verbundbauteile in Form eines sphärischen Reflektors 10 (Fig. 1) und eines Wärmetauschermoduls 12 (Fig. 2) näher erläutert werden. Dabei werden Verfahrensschritte berücksichtigt, die in dem zuvor erläuterten Beispiel beschrieben worden sind.

### Beispiel 2 (Sphärischer Reflektor 10):

Als Studie für einen keramischen Strahlungsreflektor wurde auf der Basis von MDF-Platten ein Si-SiC-Leichtbaukonzept umgesetzt. Unter Berücksichtigung der in Beispiel 1 genannten Pyrolyseschrumpfungen wurden Ring- und Kreis-förmige Plattenelemente MDF 22 mm nach dem Konzept der Fig. 1 in 7 Plattenebenen mit Holzkleber verklebt und bis 1700 °C carbonisiert. Die so entstandene Geometrie ∅ 320 mm x 90 mm aus sieben ebenen Plattenelementen 1 - 7 wurde durch Fräsen im Carbon-Zustand auf Endmaß gebracht. Lediglich die spätere sphärische Reflektorfläche erhielt als Schleifaufmaß einen um 0,5 mm kleineren Radius. Bohrungen für Befestigungselemente und konstruktiv bedingte Absätze wurden ergänzend eingebracht.

Die Keramisierung erfolgte als Si-Schmelzinfiltration bei 1650 °C in Argon-Atmosphäre. Es werden Werkstoffdichten von 2,90 g/cm³ ohne nachweisbare offene Porosität erreicht.

Nach der Keramisierung erfolgte eine Schleifbearbeitung, um das zuvor berücksichtigte Übermaß auf der Reflektorfläche durch Schleifen zu entfernen.

### Beispiel 3 (Keramischer Wärmetauscher 12):

Keramische Wärmetauscher sind seit vielen Jahren Entwicklungsgegenstand. Besonders aussichtsreich ist wegen seiner Wärmeleitfähigkeit der Verbundwerkstoff SiSiC. Problem vieler Fertigungsansätze sind die erforderlichen Bauteilabmessungen, gasdichte Verbindungen und nicht zuletzt die erheblichen Fertigungskosten.

Mit der erfindungsgemäßen Lösung bietet sich ein modulartiger Aufbau entsprechend Fig. 2 an. Für einen Prototypen wurden MDF-Platten 150 mm x 150 mm x 16 mm bei 1150 °C unter Stickstoff-Atmosphäre carbonisiert, wobei Dichten von 0,64 g/cm³ erreicht werden. Daraus werden die einzelnen Ebenen des Wärmetauschers gemäß Fig. 2 mit zurückbleibenden Stützstegen gefräst und alternierend um jeweils 90° verdreht zu einem Gesamtblock aus jeweils 2 x 6 Kanalebenen mittels Carbonkleber gefügt.

Nach Pyrolyse des Klebers bei 900 °C unter Stickstoff-Atmosphäre wird das Gesamtsystem durch Flüssigsilicierung bei 1650 °C unter Argon keramisiert und dabei stoffschlüssig gefügt. Wegen des hohen Si-Anteiles im Gefüge werden nur Dichten 2,70 bis 2,80 g/cm³ bei einer Restporosität von 4 bis 6 % realisiert.

Der heiße Abluftstrom erwärmt in einem solcherart hergestellten Wärmetauscher-Würfel von 106 mm x 106 mm x 106 mm den um 90° versetzt in die jeweiligen Zwischenebenen eintretenden Frischluftstrom. Die strikte Trennung beider Gasströme wird durch seitlich gasdicht angesetzte Anströmungshauben gesichert.

## Patentansprüche

1. Verfahren zur Herstellung eines Keramikbauteils oder Carbonbauteils gewünschter Endgeometrie unter Verwendung zumindest eines zellulosehaltigen Halbzeugformteils, das in nicht oxidierender Gasatmosphäre pyrolysiert wird,
**dadurch gekennzeichnet,**
**dass** zumindest zwei Halbzeugformteile entweder in Rohform oder nach zumindest teilweiser Carbonisierung stoffschlüssig gefügt werden, **dass** die gefügten Formteile zur Erzielung der gewünschten Endgeometrie oder einer der gewünschten Endgeometrie zzgl. eines Aufmasses entsprechenden Geometrie bearbeitet und nach der Carbonisierung in nicht oxidierender Gasatmosphäre als Carbonbauteil zur Verfügung stehen oder durch einen Metallinfiltrationsprozess bei gleichzeitigem reaktiven Fügen der zumindest zwei Formteile in einen CMC-Verbundwerkstoff umgewandelt werden.

2. Verfahren nach Anspruch 1,
**dadurch gekennzeichnet,**
**dass** das stoffschlüssige Fügen der Halbzeugformteile im Rohzustand mittels eines organischen Kleberharzes wie Holzleim durchgeführt wird.

3. Verfahren nach Anspruch 1 oder 2,
**dadurch gekennzeichnet,**
**dass** dem Kleberharz Kohlenstoffträger wie Graphit, Ruß, Pech und/oder pyrolysierte Fasern zugemischt wird.

4. Verfahren nach zumindest einem der vorhergehenden Ansprüche,
**dadurch gekennzeichnet,**
**dass** ein Kleberharz mit gegebenenfalls zugemischten Kohlenstoffträgern zum Fügen verwendet wird, dessen Carbonausbeute bei der Pyrolyse bzw. Carbonisierung an die Erfordernisse der reaktiven Keramisierung angepasst wird.

5. Verfahren nach zumindest einem der vorhergehenden Ansprüche,
**dadurch gekennzeichnet,**
**dass** die zumindest teilweise carbonisierten Formteile durch Kleben und/oder Tränken unter Verwendung von kohlenstoffhaltigen Bindemitteln gefügt werden.

6. Verfahren nach zumindest einem der vorhergehenden Ansprüche,
**dadurch gekennzeichnet,**
**dass** zum stoffschlüssigen Fügen der zumindest zwei Formteile nach zumindest teilweiser Carbonisierung ein harzbasierter kohlenstoffhaltiger Kleber verwendet wird.

7. Verfahren nach zumindest einem der vorhergehenden Ansprüche,
**dadurch gekennzeichnet,**
**dass** der zum Fügen der vorzugsweise zumindest teilweise carbonisierten Formteile verwendete Kleber durch ergänzende Zusätze wie Graphit, Ruß, Pech und/oder pyrolysierte Fasern hinsichtlich seines Kohlenstoffangebots für die reaktive Keramisierung eingestellt wird.

8. Verfahren nach zumindest einem der vorhergehenden Ansprüche,
**dadurch gekennzeichnet,**
**dass** für den Metallinfiltrationsprozess Silizium verwendet wird und/oder dass für den Metallinfiltrationsprozess metallische Carbidbildner einzeln oder im Gemisch eingesetzt werden und/oder dass der Metallinfiltrationsprozess über kapillargesteuerte Flüssiginfiltration und/oder metalldampfhaltige Gasatmosphäre durchgeführt wird.

9. Verfahren nach zumindest einem der vorhergehenden Ansprüche,
**dadurch gekennzeichnet,**
**dass** als Halbzeuge in ihrer Rohform solche verwendet werden, die eine Kontur aufweisen, die unter Berücksichtigung des bei der Herstellung des Keramikbauteils auftretenden Schwunds an die gewünschte Endgeometrie grob angepasst ist.

10. Verfahren nach zumindest einem der vorhergehenden Ansprüche,
**dadurch gekennzeichnet,**
**dass** die der Carbonisierung vorausgehende Pyrolyse bei einer Temperatur T_{B} mit 250 °C ≤ T_{B} ≤ 800 °C durchgeführt wird und/oder dass die Carbonisierung bei einer Temperatur T_{V} mit T_{V} ≥ 1000 °C, insbesondere T_{V} ≥ 1100 °C durchgeführt wird.

11. Verfahren nach zumindest einem der vorhergehenden Ansprüche,
**dadurch gekennzeichnet,**
**dass** während der Pyrolyse und/oder Carbonisierung die zusammengefügten Halbzeugformteile in Schritten von 1 K/h bis 1 K/min., insbesondere von kleiner 0,1 K/min. aufgeheizt werden und/oder dass während der Metallinfiltration ein Aufheizen der Formteile in Schritten von 3 K/min. bis 7 K/min., insbesondere von in etwa 5 K/min. durchgeführt wird, wobei insbesondere bei der Metallinfiltration nach Erreichen der Endtemperatur diese über einen Zeitraum t mit 20 min. ≤ t < 40 min., insbesondere t in etwa 30 min. gehalten wird.

12. Verfahren nach zumindest einem der vorhergehenden Ansprüche,
**dadurch gekennzeichnet,**
**dass** die vorzugsweise modular zusammengesetzten Halbzeugformteile maximale Wandstärke D mit D ≤ 160 mm, insbesondere D ≤120 mm, vorzugsweise D ≤ 50 mm aufweisen.

13. Verfahren nach zumindest einem der vorhergehenden Ansprüche,
**dadurch gekennzeichnet,**
**dass** das zellulosehaltige Holzhalbzeugformteil aus zumindest einem harzhaltigen Bindemittel und zumindest einem Rohstoff aus Pflanzen- bzw. Holzfasern besteht.

14. Verfahren nach zumindest einem der vorhergehenden Ansprüche,
**dadurch gekennzeichnet,**
**dass** als Halbzeugformteil eine mitteldichte Holzfaserplatte (MDF) mit Rohdichten zwischen 600 kg/m³ und 800 kg/m³ und/oder eine hochdichte Faserplatte (HDF) mit Rohdichten ≥ 800 kg/m³ verwendet werden, wobei insbesondere von der oder den Holzfaserplatten Oberflächenbereiche abgetragen werden, deren Dichte größer als mittlere Dichte der Holzfaserplatte ist.

15. Verfahren nach zumindest einem der vorhergehenden Ansprüche,
**dadurch gekennzeichnet,**
**dass** durch Tränkung der Halbzeugformteile mit Harzen und/oder anderen keramischen Prekursoren Gefüge und Endprodukteigenschaften anforderungsgerecht gesteuert werden, und/oder dass durch Fügeprozesse und/oder Tränkprozesse der zumindest teilweise, insbesondere vollständig carbonisierten Formteile Bauteilgeometrie und Werkstoffgefüge gezielt eingestellt werden.

16. Verfahren nach zumindest einem der vorhergehenden Ansprüche,
**dadurch gekennzeichnet,**
**dass** nach dem zumindest teilweisen Carbonisieren, insbesondere nach dem vollständigen Carbonisieren der gefügten Formteile gewünschte Geometrien, Hinterschneidungen, Aussparungen, Absätze und/oder Gewinde endformgetreu oder nahezu endformgetreu herausgearbeitet werden.

17. Verfahren nach zumindest einem der vorhergehenden Ansprüche,
**dadurch gekennzeichnet,**
**dass** eine Endbearbeitung des Keramikbauteils durch Schleifen auf notwendige Funktionsflächen wie Dichtflächen beschränkt wird.

18. Verfahren nach zumindest einem der vorhergehenden Ansprüche,
**dadurch gekennzeichnet,**
**dass** in das Halbzeugformteil durch metallische oder metallorganische Additive zum pressfähigen Versatz anorganische Wirkkomponenten für die Carbidbildung und/oder Ausbildung späterer spezifischer Eigenschaftsmerkmale des Keramikbauteils eingebracht werden.

19. Verfahren zur Herstellung eines keramischen Verbundwerkstoffes und darauf aufbauender Verbund-Bauteile, bei dem als Rohstoff vorgefertigte Halbzeuge aus harzgebundenen Pflanzenfasern genutzt werden, daraus gefertigte Rohformen mit Holzklebern gefügt oder ungefügt bei Temperaturen > 800 °C carbonisiert, durch eventuelle zusätzliche Klebe-/Fügeprozesse oder Tränkprozesse im Carbon-Zustand und nach einer Vollcarbonisierung bei Temperaturen > 1000 °C durch mechanische Bearbeitung im Carbon-Zustand unter Berücksichtigung gegebenenfalls notwendiger Schleifaufmaße für den keramischen Finishprozess auf die Endgeometrie gebracht und dann als Kohlenstoff-Produkte zur Verfügung stehen oder durch einen anschließenden Metallinfiltrationsprozess unter Luftabschluss in einen CMC-Verbundwerkstoff umgewandelt werden bei gleichzeitigem reaktiven Fügen der modular aufgebauten keramischen Baugruppe.
